# EUROPEAN PATENT APPLICATION

(11) **EP 3 970 855 A1**
(43) Date of publication of application: **23.03.2022**
(21) Application number: 20805155.7
(22) Date of filing: 11.05.2020
(51) Int. Cl.: B01J 35/04, B01D 53/86, B01D 53/94, F01N 3/10, F01N 3/28, B01J 23/63

(54) **EXHAUST GAS PURIFICATION CATALYST DEVICE**

(30) Priority: 15.05.2019 JP 2019092074
(71) Applicant: Cataler Corporation, Kakegawa-city Shizuoka 437-1492 (JP); TOYOTA JIDOSHA KABUSHIKI KAISHA, Toyota-shi Aichi 471-8571 (JP)
(72) Inventor: IWATA, Kana, Kakegawa-shi, Shizuoka 437-1492 (JP); ITOU, Minoru, Kakegawa-shi, Shizuoka 437-1492 (JP); OHISHI, Shunsuke, Kakegawa-shi, Shizuoka 437-1492 (JP); YOSHIDA, Takeru, Toyota-shi, Aichi 471-8571 (JP); SUZUKI, Hiromasa, Toyota-shi, Aichi 471-8571 (JP); KAKINOHANA, Masaru, Toyota-shi, Aichi 471-8571 (JP); KAMITANI, Satoshi, Toyota-shi, Aichi 471-8571 (JP)
(74) Representative: Ricker, Mathias
(86) International application number: PCT/JP2020/018856
(87) International publication number: WO 2020/230762

(57) **Abstract**

An exhaust gas purification catalyst device having a substrate and one or more catalytic noble metals supported on the substrate. The substrate has a plurality of cells partitioned by a porous wall 1 and includes ceria-zirconia compound oxide particles. A specific noble metal that is one of the one or more catalytic noble metals satisfies both the following requirements (1) and (2): (1) the noble metal 50% support depth for the specific noble metal is 30% or less of the distance from the surface of the porous wall 1 to the center of the interior of the porous wall 1, and (2) the noble metal 90% support depth for the specific noble metal is 35% or more of the distance from the surface of the porous wall 1 to the center of the interior of the porous wall 1.

## Description

### FIELD

The present invention relates to an exhaust gas purification catalytic device.

### BACKGROUND

Generally, in an exhaust gas purification catalytic device, a catalytic coating layer is formed on a honeycomb substrate composed of, for example, cordierite. The catalytic coating layer contains carrier particles, noble metal catalyst particles supported on the carrier particles, and cocatalyst particles. The use of a ceria-zirconia composite oxide having an oxygen storage capacity (OSC ability) as one of the cocatalyst particles is well known.

Recently, the use of ceria-zirconia composite oxide particles as cocatalyst particles, not arranged in the catalytic coating layer but as one of the constituent materials of a honeycomb substrate, has been investigated. For example, PTL 1 discloses an exhaust gas purification catalytic device in which a honeycomb substrate contains ceria-zirconia composite oxide particles. In this exhaust gas purification catalytic device, a catalytic coating layer is not present, and noble metal catalyst particles are supported directly on the honeycomb substrate by impregnating the honeycomb substrate with a solution containing a noble metal.

PTL 2 also discloses such a honeycomb substrate, and an exhaust gas purification catalytic device using the same.

As general coating methods for forming a catalytic coating layer on a honeycomb substrate composed of, for example, cordierite, the methods described in PTL 3 and 4 are well known.

### [CITATION LIST]

### [PATENT LITERATURE]

[PTL 1] Japanese Unexamined Patent Publication (Kokai) No. 2015-85241
[PTL 2] Japanese Unexamined Patent Publication (Kokai) No. 2015-77543
[PTL 3] Japanese Unexamined Patent Publication (Kokai) No. 2008-302304
[PTL 4] WO 2010/114132

### SUMMARY

### [TECHNICAL PROBLEM]

The exhaust gas purification catalytic devices disclosed in PTL 1 and 2 have a small heat capacity due to the absence of a catalytic coating layer, and the temperature of the honeycomb substrate can be raised easily. Thus, a high warm-up performance can be obtained.

However, these exhaust gas purification catalytic devices require further improvements in exhaust gas purification ability.

The present invention has been made in view of the above circumstances. Thus, the object of the present invention is to provide an exhaust gas purification catalytic device which uses a substrate containing ceria-zirconia composite oxide particles as one of the constituent materials and has both a high warm-up performance and a high degree of exhaust gas purification ability.

### [SOLUTION TO PROBLEM]

The present invention is described as follows.

«Aspect 1» An exhaust gas purification catalytic device, comprising
   a substrate and
   one or more catalytic noble metals supported on the substrate, wherein
   the substrate comprises a plurality of cells partitioned by a porous wall;
   the substrate contains ceria-zirconia composite oxide particles; and
   a specific noble metal, which is one of the one or more catalytic noble metals, satisfies both of requirements (1) and (2) below:
      (1) for the specific noble metal, a depth of supporting 50% by mass of the noble metal is 30% or less of a distance from a surface of a porous wall to a center within the porous wall, and
      (2) for the specific noble metal, a depth of supporting 90% by mass of the noble metal is 35% or more of a distance from a surface of a porous wall to a center within the porous wall, wherein the depth of supporting 50% by mass of the noble metal is a depth up to which 50% by mass of the specific noble metal is supported, based on an amount of the specific noble metal supported from the surface of the porous wall to the center within the porous wall, and
   the depth of supporting 90% by mass of the noble metal is a depth up to which 90% by mass of the specific noble metal is supported, based on an amount of the specific noble metal supported from the surface of the porous wall to the center within the porous wall.
«Aspect 2» The exhaust gas purification catalytic device according to Aspect 1, wherein the plurality of cells in the substrate penetrate from an upstream end to a downstream end of an exhaust gas flow.
«Aspect 3» The exhaust gas purification catalytic device according to Aspect 1, wherein the plurality of cells in the substrate comprise
   an inlet side cell, which is opened on an upstream end of an exhaust gas flow and sealed on a downstream end thereof; and
   an outlet side cell, which is sealed on the upstream end of the exhaust gas flow and opened on the downstream end thereof, and
   are thereby configured to allow an exhaust gas flowed into the inlet side cell to pass through the porous wall and discharge from the outlet side cell.
«Aspect 4» The exhaust gas purification catalytic device according to any one of Aspects 1 to 3, wherein the specific noble metal further satisfies requirement (3) below:
   (3) for the specific noble metal, a depth of supporting 30% by mass of the noble metal is 18% or less of a distance from a surface of a porous wall to a center within the porous wall, wherein
   the depth of supporting 30% by mass of the noble metal is a depth up to which 30% by mass of a specific noble metal is supported, based on an amount of the specific noble metal supported from the surface of the porous wall to the center within the porous wall.
«Aspect 5» The exhaust gas purification catalytic device according to any one of Aspects 1 to 4, wherein the specific noble metal further satisfies requirement (4) below:
   (4) for the specific noble metal, a depth of supporting 70% by mass of the noble metal is 20% to 45% of a distance from a surface of a porous wall to a center within the porous wall, wherein
   the depth of supporting 70% by mass of the noble metal is a depth up to which 70% by mass of the specific noble metal is supported, based on an amount of the specific noble metal supported from the surface of the porous wall to the center within the porous wall.
«Aspect 6» The exhaust gas purification catalytic device according to any one of Aspects 1 to 5, wherein the specific noble metal is platinum, palladium, or rhodium.
«Aspect 7» The exhaust gas purification catalytic device according to any one of Aspects 1 to 6, wherein the specific noble metal is platinum or palladium.
«Aspect 8» The exhaust gas purification catalytic device according to any one of Aspects 1 to 7, wherein
   the specific noble metal is platinum or palladium, and
   the catalytic noble metals include rhodium.

### [ADVANTAGEOUS EFFECTS OF INVENTION]

The exhaust gas purification catalytic device of the present invention can demonstrate a high warm-up performance and a high degree of exhaust gas purification ability.

### BRIEF DESCRIPTION OF DRAWINGS

FIG. 1(a) is a perspective view schematically showing one example of the configuration of the exhaust gas purification catalytic device of the present invention. FIG. 1(b) is an A-A line cross-sectional view of the exhaust gas purification catalytic device of FIG. 1(a).
FIG. 2 is an enlarged schematic view showing an enlarged portion of a porous wall of the substrate in the exhaust gas purification catalytic device of the present invention.
FIG. 3(a), FIG. 3(b), and FIG. 3(c) are schematic cross-sectional views showing configurations of the exhaust gas purification catalytic device obtained in Comparative Example 1, Reference Example 1, and Example 1, respectively.
FIG. 4 is a graph showing the palladium distribution in the thickness direction within a porous wall in the exhaust gas purification catalytic device obtained in Comparative Example 1.
FIG. 5 is a graph showing the palladium distribution in the thickness direction within a porous wall in the exhaust gas purification catalytic device obtained in Reference Example 1.
FIG. 6 is a graph showing the palladium distribution in the thickness direction within a porous wall in the exhaust gas purification catalytic device obtained in Example 1.

### DESCRIPTION OF EMBODIMENTS

### «Exhaust gas purification catalytic device»

The exhaust gas purification catalytic device of the present invention comprises
a substrate and
one or more catalytic noble metals supported on the substrate, wherein
the substrate comprises a plurality of cells partitioned by a porous wall;
the substrate contains ceria-zirconia composite oxide particles; and
a specific noble metal, which is one of the one or more catalytic noble metals, satisfies both of requirements (1) and (2) below:
   (1) for the specific noble metal, a depth of supporting 50% by mass of the noble metal is 30% or less of a distance from a surface of a porous wall to a center within the porous wall, and
   (2) for the specific noble metal, a depth of supporting 90% by mass of the noble metal is 35% or more of a distance from a surface of a porous wall to a center within the porous wall, wherein
the depth of supporting 50% by mass of the noble metal is a depth up to which 50% by mass of the specific noble metal is supported, based on the amount of the specific noble metal supported from the surface of the porous wall to the center within the porous wall, and
the depth of supporting 90% by mass of the noble metal is a depth up to which 90% by mass of the specific noble metal is supported, based on the amount of the specific noble metal supported from the surface of the porous wall to the center within the porous wall.

The exhaust gas purification catalytic device of the present invention demonstrates a high warm-up performance and a high degree of exhaust gas purification ability, due to the configuration described above.

The requirement (1) is a requirement to ensure that a large portion of the specific noble metal is localized near the surface of the porous wall of the substrate. According to this requirement, it is possible for 50% or more of the specific noble metal to be easily contacted with an inflowing exhaust gas, and the utilization efficiency of the specific noble metal is increased.

The requirement (2) is a requirement to ensure that the specific noble metal permeates into the porous wall of the substrate and is supported at a predetermined ratio. According to this requirement, the specific noble metal is present in the vicinity of the ceria-zirconia composite oxide particles present within the porous wall of the substrate. Therefore, the ceria-zirconia composite oxide particles can demonstrate a desired OSC ability in the exhaust gas purification catalytic device of the present invention.

Since it is not necessary for the exhaust gas purification catalytic device of the present invention to have a catalytic coating layer formed on the porous wall of the substrate, a low level of heat capacity is maintained, and thus a high degree of warm-up performance is demonstrated.

Combined with the above, the exhaust gas purification catalytic device is considered to have both a high warm-up performance and a high degree of exhaust gas purification ability.

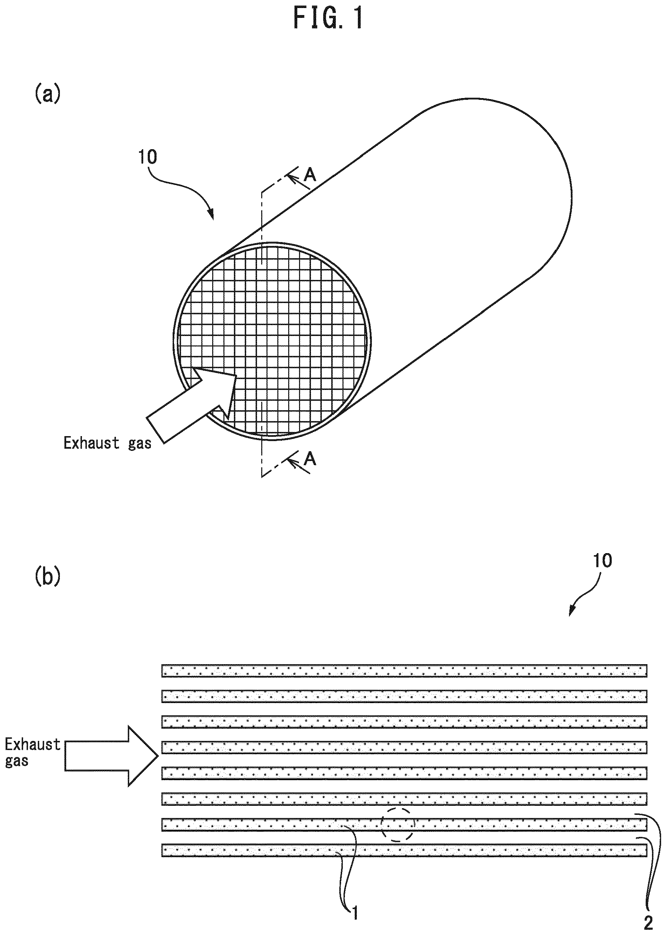

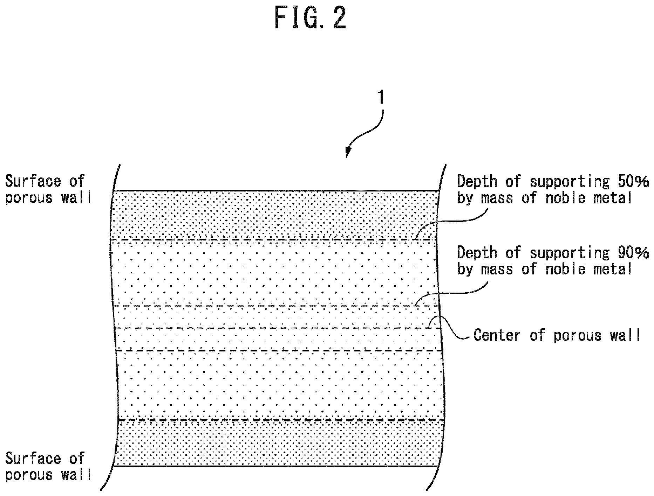

Schematic views for describing configurations of the exhaust gas purification catalytic device of the present invention are shown in FIG. 1 and FIG. 2. FIG. 1(a) is a perspective view schematically showing one example of an embodiment of the exhaust gas purification catalytic device of the present invention. FIG. 1(b) is an A-A line cross-sectional view of the exhaust gas purification catalytic device of FIG. 1(a). FIG. 2 is an enlarged view of the dashed line circle in FIG. 1(b).

The exhaust gas purification catalytic device (10) shown in FIG. 1 and FIG. 2 comprises a substrate. The substrate contains ceria-zirconia composite oxide particles and comprises a plurality of cells (2) partitioned by a porous wall (1).

The exhaust gas purification catalytic device (10) comprises
a straight-type honeycomb substrate in which a plurality of cells (2) penetrate from an upstream end to a downstream end of an exhaust gas flow.

However, it is possible to use a wall flow-type honeycomb substrate in which the plurality of cells (2) comprise
an inlet side cell, which is opened on the upstream end of the exhaust gas flow and sealed on the downstream end thereof; and
an outlet side cell, which is sealed on the upstream end of the exhaust gas flow and sealed on the downstream end thereof, and
are thereby configured to allow an exhaust gas flowed into the inlet side cell to pass through the porous wall (1) and discharge from the outlet side cell.

The exhaust gas purification catalytic device (10) contains catalytic noble metals supported on the substrate. A specific noble metal, which is one of the catalytic noble metals, satisfies both of the following requirements (1) and (2):
(1) for the specific noble metal, a depth of supporting 50% by mass of the noble metal is 30% or less of a distance from a surface of a porous wall to a center within the porous wall, and
(2) for the specific noble metal, a depth of supporting 90% by mass of the noble metal is 35% or more of a distance from a surface of a porous wall to a center within the porous wall.

Hereinafter, the elements constituting the exhaust gas purification catalytic device of the present invention will be detailed in order.

### <Substrate>

The substrate in the exhaust gas purification catalytic device of the present invention comprises a plurality of cells partitioned by a porous wall and contains ceria-zirconia composite oxide particles.

The substrate in the exhaust gas purification catalytic device of the present invention comprises a plurality of cells partitioned by a porous wall. The substrate may be a straight flow-type honeycomb substrate in which the plurality of cells penetrate from an upstream end to a downstream end of an exhaust gas flow in the length direction of the substrate, or may be a wall flow-type honeycomb substrate in which the plurality of cells comprise an inlet side cell, which is opened on the upstream end of the exhaust gas flow and sealed on the downstream end thereof; and an outlet side cell, which is sealed on the upstream end of the exhaust gas flow and opened on the downstream end thereof, and by this configuration, are configured to allow an exhaust gas flowed into the inlet side cell to pass through the porous wall and discharge from the outlet side cell.

The substrate may contain ceria-zirconia composite oxide particles. The ceria-zirconia composite oxide particles may be particles of a solid solution of ceria and zirconia. In addition to ceria and zirconia, a rare earth element (for example, lanthanum (La) or yttrium (Y)) may be further dissolved as a solid in the solid solution.

The substrate may consist of only ceria-zirconia composite oxide particles. Other than the ceria-zirconia composite oxide particles, an additional component may be contained. The additional component may be, for example, inorganic oxide particles other than the ceria-zirconia composite oxide particles or a binder.

The inorganic oxide particles other than the ceria-zirconia composite oxide particles may be oxide particles comprising one or more elements selected from, for example, aluminum, silicon, zirconium, titanium, and tungsten, particularly aluminum particles.

The binder may be an inorganic binder, for example, alumina sol or titania sol.

The ratio of the ceria-zirconia composite oxide particles contained in the substrate, as a ratio of the mass of the ceria-zirconia composite oxide particles relative to the total mass of the substrate, may be, for example, 20% by mass or greater, 30% by mass or greater, 40% by mass or greater, 50% by mass or greater, 60% by mass or greater, or 70% by mass or greater, and may be 95% by mass or less, 90% by mass or less, 80% by mass or less, 70% by mass or less, 60% by mass or less, 50% by mass or less, or 40% by mass or less.

The capacity of the substrate may be appropriately set according to the displacement of the internal combustion engine for the expected application. The capacity of the substrate may be, for example, 500 mL or greater, 600 mL or greater, 800 mL or greater, 1,000 mL or greater, or 1,500 mL or greater, and may be, for example, 3,000 mL or less, 2,500 mL or less, 2,000 mL or less, 1,500 mL or less, or 1,200 mL or less.

### <Catalytic noble metal>

The exhaust gas purification catalytic device of the present invention comprises one or more catalytic noble metals supported on a substrate.

The catalytic noble metals may be, for example, a platinum group noble metal, particularly one, two, or three selected from platinum, palladium, and rhodium.

In the exhaust gas purification catalytic device of the present invention, when the catalytic noble metals include platinum, the amount of platinum in terms of the mass of metallic platinum per L of substrate capacity may be, for example, 0.01 g/L or greater, 0.02 g/L or greater, 0.05 g/L or greater, 0.07 g/L or greater, or 0.08 g/L or greater, and may be, for example, 1.0 g/L or less, 0.8 g/L or less, 0.6 g/L or less, 0.4 g/L or less, or 0.2 g/L or less.

When the catalytic noble metals include palladium, the amount of palladium in terms of the mass of metallic palladium per L of substrate capacity, may be, for example, 0.5 g/L or greater, 1.0 g/L or greater, 1.5 g/L or greater, 2.0 g/L or greater, 2.5 g/L or greater, or 3.0 g/L or greater, and may be, for example, 10.0 g/L or less, 8.0 g/L or less, 6.0 g/L or less, 5.0 g/L or less, or 4.0 g/L or less.

When the catalytic noble metals include rhodium, the amount of rhodium in terms of the mass of metallic rhodium per L of substrate capacity may be, for example, 0.01 g/L or greater, 0.05 g/L or greater, 0.10 g/L or greater, or 0.15 g/L or greater, and may be, for example, 0.50 g/L or less, 0.40 g/L or less, 0.35 g/L or less, or 0.30 g/L or less.

In the exhaust gas purification catalytic device of the present invention, the catalytic noble metals may include platinum or palladium, or may include platinum or palladium with rhodium.

### (Specific noble metal)

In the exhaust gas purification catalytic device of the present invention, a specific noble metal, which is one of the catalytic noble metals, satisfies depths of supporting the noble metal (specifically, both of the requirements (1) and (2) below) described below. When the exhaust gas purification catalytic device contains a plurality of catalytic noble metals, one of the catalytic noble metals may satisfy the requirements (1) and (2) as the specific noble metal. The catalytic noble metals other than the specific noble metal may or may not satisfy the requirements (1) and (2).

In the exhaust gas purification catalytic device of the present invention, the specific noble metal may be platinum, palladium, or rhodium, and may further be platinum or palladium. In the exhaust gas purification catalytic device of the present invention, the specific noble metal is particularly preferably platinum or palladium, and the catalytic noble metals other than the specific noble metal may include rhodium.

### (Depth of supporting noble metal)

In the exhaust gas purification catalytic device, the specific noble metal satisfies both of the following requirements (1) and (2):
(1) for the specific noble metal, a depth of supporting 50% by mass of the noble metal is 30% or less of a distance from a surface of a porous wall to a center within the porous wall, and
(2) for the specific noble metal, a depth of supporting 90% by mass of the noble metal is 35% or more of a distance from a surface of a porous wall to a center within the porous wall.

According to the requirement (1), for the specific noble metal, the depth of supporting 50% by mass of the noble metal, based on the amount of the specific noble metal supported from the surface of the porous wall to the center within the porous wall, is a depth up to which 50% by mass of the specific noble metal is supported. As described above, this requirement (1) is a requirement to ensure that a large portion of the specific noble metal is localized near the surface of the porous wall of the substrate. From the viewpoint of having more of the specific noble metal localized near the surface of the porous wall, it is considered that the shallower the depth of supporting 50% by mass of the noble metal is, the better. From this viewpoint, for the specific noble metal, the depth of supporting 50% by mass of the noble metal may be 30% or less, 28% or less, 24% or less, 20% or less, 19% or less, 18% or less, 17% or less, or 16% or less of a distance from the surface of the porous wall to the center within the porous wall.

However, if the depth of supporting 50% by mass of the noble metal is made excessively shallow and the degree of localization of the specific noble metal is excessively high near the surface of the porous wall, satisfying the requirement (2) of the specific noble metal permeating into the porous wall of the substrate at a constant ratio may be difficult. From this viewpoint, for the specific noble metal, the depth of supporting 50% by mass of the noble metal may be, for example, 12% or greater, 14% or greater, 16% or greater, 17% or greater, 18% or greater, or 20% or greater of a distance from the surface of the porous wall to the center within the porous wall.

According to the requirement (2), for the specific noble metal, the depth of supporting 90% by mass of the noble metal, based on the amount of the specific noble metal supported from the surface of the porous wall to the center within the porous wall, is a depth up to which 90% by mass of the specific noble metal is supported. As described above, this requirement (2) is a requirement to ensure that the specific noble metal permeates into the porous wall of the substrate at a constant ratio. From the viewpoint of having more of the specific noble metal permeating to near the center of the porous wall, it is considered that the deeper the depth of supporting 90% by mass of the noble metal is, the better. From this viewpoint, for the specific noble metal, the depth of supporting 90% by mass of the noble metal may be 35% or greater, 40% or greater, 45% or greater, or 50% or greater of a distance from the surface of the porous wall to the center within the porous wall.

However, if the depth of supporting 90% by mass of the noble metal is made excessively deep and the specific noble metal permeates excessively to near the center of the porous wall, satisfying the requirement (1) of a large proportion of the specific noble metal localizing near the surface of the porous wall of the substrate may be difficult. From this viewpoint, for the specific noble metal, the depth of supporting 90% by mass of the noble metal may be, for example, 60% of less, 58% or less, 56% or less, 54% or less, 52% or less, 50% or less, or 48% or less.

To allow for a better balance of the amount of specific noble metal localized near the surface of the porous wall and the amount of specific noble metal permeating to near the center of the porous wall in the exhaust gas purification catalytic device of the present invention, the specific noble metal may satisfy at least one of the following requirements (3) and (4):
(3) for the specific noble metal, a depth of supporting 30% by mass of the noble metal is 18% or less of a distance from a surface of a porous wall to a center within the porous wall, and
(4) for the specific noble metal, a depth of supporting 70% by mass of the noble metal is 20% to 45% of a distance from a surface of a porous wall to a center within the porous wall.

According to the requirement (3), for the specific noble metal, the depth of supporting 30% by mass of the noble metal, based on the amount of the specific noble metal supported from the surface of the porous wall to the center of the porous wall, is a depth up to which 30% by mass of the specific noble metal is supported.

For the specific noble metal, the depth of supporting 30% by mass of the noble metal, may be, for example, 1% or greater, 3% or greater, 5% or greater, 8% or greater, 9% or greater, 10% or greater, 11% or greater, or 12% or greater, and may be, for example, 18% or less, 16% or less, 14% or less, 12% or less, or 10% or less.

For the specific noble metal, the depth of supporting 30% by mass of the noble metal is smaller (shallower) than, for the specific noble metal, the depth of supporting 50% by mass of the noble metal.

According to the requirement (4), for the specific noble metal, the depth of supporting 70% by mass of the noble metal, based on the amount of the specific noble metal supported from the surface of the porous wall to the center of the porous wall, is a depth up to which 70% by mass of the specific noble metal is supported.

For the specific noble metal, the depth of supporting 70% by mass of the noble metal may be, for example, 20% or greater, 25% or greater, 30% or greater, or 35% or greater, and may be, for example, 45% or less, 40% or less, 35% or less, or 30% or less.

For the specific noble metal, the depth of supporting 70% by mass of the noble metal is larger (deeper) than, for the specific noble metal, the depth of supporting 50% by mass of the noble metal, and is smaller (shallower) than, for the specific noble metal, the depth of supporting 90% by mass of the noble metal.

The exhaust gas purification catalytic device of the present invention may contain rhodium as a catalytic noble metal other than the specific noble metal, as described above.

### (Catalytic coating layer)

The exhaust gas purification catalytic device of the present invention may or may not comprise a catalytic coating layer present in an exhaust gas purification catalytic device using a cordierite-based honeycomb substrate of the prior art. In order to maintain superior warm-up performance, the exhaust gas purification catalytic device of the present invention preferably does not comprise a catalytic coating layer. Even without the catalytic coating layer, a sufficiently high exhaust gas purification ability can be demonstrated.

### «Method for manufacturing exhaust gas purification catalytic device»

The exhaust gas purification catalytic device of the present invention may be manufactured by, for example, a method for manufacturing an exhaust gas purification catalytic device which comprises
a substrate and
one or more catalytic noble metals supported on the substrate,
the substrate
   comprising a plurality of cells partitioned by a porous wall and
   containing ceria-zirconia composite oxide particles,
wherein the method (first manufacturing method), using the substrate, comprises the following steps (1) and (2) to be carried out in random order.

(1) Immersing the substrate in a coating liquid for permeating a specific noble metal, containing a precursor of the specific noble metal, which is one of the catalytic noble metals, followed by baking.
(2) Coating the substrate with a coating liquid for surface-localizing a specific noble metal, containing a precursor of the specific noble metal, which is one of the catalytic noble metals, and a thickener, followed by baking.

As an alternative method, the exhaust gas purification catalytic device may be manufactured by, for example, a method for manufacturing an exhaust gas purification catalytic device which comprises
a substrate and
one or more catalytic noble metals supported on the substrate,
the substrate
   comprising a plurality of cells partitioned by a porous wall and
   containing ceria-zirconia composite oxide particles,
wherein the method (second manufacturing method), using the substrate, comprises the following steps (3) and (4) to be carried out in random order and step (5) to be further carried out thereafter.

(3) Immersing the substrate in a coating liquid for permeating a specific noble metal, containing a precursor of the specific noble metal, which is one of the catalytic noble metals.
(4) Coating the substrate with a coating liquid for surface-localizing a specific noble metal, containing a precursor of the specific noble metal, which is one of the catalytic noble metals, and a thickener.
(5) Baking the substrate after steps (3) and (4) are carried out in random order.

Of these manufacturing methods, the first manufacturing method is preferred in that the support position (depth) of the specific noble metal can be easily and reliably controlled. Hereinafter, the first manufacturing method will be described. However, a person skilled in the art can carry out the second manufacturing method with reference to the following description and technical common knowledge in the art.

In the first production method, according to the step (1), a precursor of a specific noble metal permeates into a porous wall of the substrate and is baked at the permeation site to be converted into a catalytic noble metal. Thus, the catalytic noble metal is supported over a wide range of depths with the porous wall of the substrate. According to the step (2), the precursor of the specific noble metal permeating into the porous wall of the substrate remains near the surface of the porous wall and is baked at the permeation site to be converted into a catalytic noble metal. Thus, the catalytic noble metal is supported near the surface of the porous wall of the substrate.

By carrying out both of the steps (1) and (2), an exhaust gas purification catalytic device, satisfying the predetermined depth of supporting 50% by mass of the noble metal and the predetermined depth of supporting 90% by mass of the noble metal, of the present invention can be obtained.

The substrate may be appropriately selected according to the substrate in the desired exhaust gas purification catalytic device and used. Thus, the substrate may be a straight flow-type or wall flow-type substrate comprising a plurality of cells partitioned by a porous wall and containing ceria-zirconia composite oxide particles.

In the first manufacturing method, step (1) and step (2) may be carried out in random order. However, if the step (2) is carried out first, the specific noble metal is supported near the surface of the porous partition wall of the substrate. Thereafter, when the step (1) is carried out in such a state, the specific noble metal already supported near the surface of the porous partition wall of the substrate may prevent the precursor of the specific noble metal from permeating into the porous wall of the substrate. In that case, for the specific noble metal, it may be difficult to achieve the desired values of the depth of supporting 50% by mass of the noble metal and the depth of supporting 90% by mass of the noble metal. Considering this, the step (1) may be carried out first, followed by the step (2) in the first manufacturing method.

The coating liquid for permeating a specific noble metal used in the step (1) may be, for example, an aqueous solution, containing at least a precursor of the specific noble metal. The coating liquid for permeating the specific noble metal, may further contain a precursor of a catalytic noble metal other than the specific noble metal or a thickener, as needed. The coating liquid for permeating the specific noble metal may not contain inorganic oxide carrier particles.

The precursor of a specific noble metal may be, for example, a strong acid salt of the specific noble metal, particularly a nitrate or a sulfate of the specific noble metal. When a catalytic noble metal other than the specific noble metal is contained, the precursor thereof may be a strong acid salt of the catalytic noble metal, particularly a nitrate or a sulfate of the catalytic noble metal.

As the thickener, the same thickener as the one contained in the coating liquid for surface-localizing a specific noble metal described below may be used after appropriately adjusting the content.

In the step (1), the substrate, after being immersed in the coating liquid for permeating the specific noble metal, is baked.

The degree in which a precursor of a specific noble metal permeates into the porous wall of the substrate can be adjusted by appropriately changing the immersion conditions. Examples of immersion conditions include the viscosity and temperature of the coating liquid, the immersion time, and the immersion pressure.

In order to remove excess coating liquid from the substrate, operations such as blowing with compressed gas (compressed air), vacuum suction, or centrifugal removal, may be carried out after immersing and before baking. The substrate may also be dried. These operations may be carried out according to a standard method. Baking may be carried out under the appropriate conditions, for example, 400 °C to 1,000 °C and 30 min to 12 h.

The coating liquid for surface-localizing a specific noble metal used in the step (2) may be, for example, an aqueous solution, comprising at least a precursor of the specific noble metal and a thickener. The coating liquid for surface-localizing the specific noble metal may further contain a precursor of a catalytic noble metal other than the specific noble metal as needed. The coating liquid for surface-localizing the specific noble metal may not contain inorganic oxide carrier particles.

The precursor of a specific noble metal contained in the coating liquid for surface-localizing the specific noble metal may be appropriately selected for use from the ones described above as a precursor contained in the coating liquid for permeating the specific noble metal. The specific noble metal precursor contained in the coating liquid for surface-localizing the specific noble metal contains the same noble metal element as the specific noble metal precursor contained in the coating liquid for permeating the specific noble metal. The precursor compounds may be the same or different as long as the noble metal element is the same.

The thickener may be, for example, a water-soluble polymer, a cellulose derivative, or a polysaccharide. The water-soluble polymer may be, for example, polyvinyl alcohol, ethylene glycol, or propylene glycol. The cellulose derivative may be, for example, hydroxyethyl cellulose, carboxymethyl cellulose, or methyl cellulose. The polysaccharide may be, for example, pectin, xanthan gum, or guar gum.

The viscosity of the coating liquid for surface-localizing the specific noble metal is improved due to the blending of the thickener, and the degree of infiltration into the porous wall when coated on the substrate is adjusted, whereby, for the specific noble metal, a desired depth of supporting 50% by mass of the noble metal can be achieved.

The viscosity of the coating liquid for surface-localizing the specific noble metal at a shear rate of 380 s⁻¹ may be, for example, 10 mPa or greater, 50 mPa or greater, or 100 mPa or greater, and may be, for example, 1,000 mPa or less, 800 mPa or less, 600 mPa or less, 400 mPa or less, 300 mPa or less, or 200 mPa or less. The viscosity of the coating liquid at a shear rate of 380 s⁻¹ may be measured using a commercially available cone plate-type viscometer (for example, model name "TV-33 viscometer" manufactured by Toki Sangyo Co., Ltd.), using a 1° 34' × R24 conical flat plate-type cone while changing the rotation speed in the range of 1 to 100 rpm, at 25 °C.

The viscosity of the coating liquid for surface-localizing the specific noble metal at a shear rate of 4 s⁻¹ may be, for example, 100 mPa or greater, 500 mPa or greater, 1,000 mPa or greater, 3,000 mPa or greater, or 5,000 mPa or greater, and may be, for example, 50,000 mPa or less, 30,000 mPa or less, 10,000 mPa or less, 7,000 mPa or less, 5,000 mPa or less, or 3,000 mPa or less. The viscosity of the coating liquid at a shear rate of 4 s⁻¹ may be measured using a commercially available spindle-type viscometer (for example, model name "TVE-30H viscometer" manufactured by Toki Sangyo Co., Ltd.) at normal temperature.

When a precursor of a catalytic noble metal other than the specific noble metal is contained in the coating liquid for surface-localizing the specific noble metal, the same precursor as the one described above for the noble metal precursor contained in the coating liquid for permeating the specific noble metal may be appropriately selected and used.

The coating liquid for surface-localizing a specific noble metal may be coated onto the substrate by, for example, any of the following methods:
providing a coating liquid for surface-localizing a specific noble metal from one of the opening sides of the substrate, followed by
suctioning the provided coating liquid for surface-localizing the specific noble metal from a substrate opening side opposite to the coating liquid providing side (first coating method), or
providing a coating liquid for surface-localizing a specific noble metal from one of the opening sides of the substrate, followed by
pumping the provided coating liquid for surface-localizing the specific noble metal from a substrate opening side of the coating liquid providing side (second coating method).

The baking after coating may be carried out under the appropriate conditions, for example, 400 °C to 1,000 °C and 30 min to 12 h.

According to the method described above, the exhaust gas purification catalytic device of the present invention, which demonstrates a high warm-up performance and a high exhaust gas purification ability, can be manufactured. However, the method described above is one example of the method for manufacturing the exhaust gas purification catalytic device of the present invention. The exhaust gas purification catalytic device of the present invention may be manufactured by another method.

### EXAMPLES

The unit of gas concentration in the following Examples is based on volume, unless specified otherwise.

### <<Substrate>>

In the following Examples and Comparative Examples, a straight flow-type substrate was used as the substrate. The substrate was a ceria-zirconia based (CZ based) monolith-type honeycomb substrate containing ceria-zirconia composite oxide particles at 21% by weight in terms of the weight of ceria and 25% by weight in terms of the weight of zirconia. The size of the substrate was as follows:
Diameter: 117 mm
Length: 80 mm
Capacity: 860 mL
Cell count: 400 cells/inch²
Cell shape: square

### «Comparative Example 1»

### (1) Preparation of coating liquid

A coating liquid (coating liquid for permeating a specific noble metal) was prepared by charging and then dissolving 0.53 g (0.50 g/L per L of substrate capacity) metallic palladium equivalent of palladium nitrate in pure water.

### (2) Manufacture of exhaust gas purification catalytic device

The substrate was immersed in the obtained coating liquid for permeating the specific noble metal described above. The substrate after immersing was dried and further baked in an electric furnace at 500 °C for 1 h to have palladium supported in the porous wall of the substrate, whereby the exhaust gas purification catalytic device of Comparative Example 1 was manufactured.

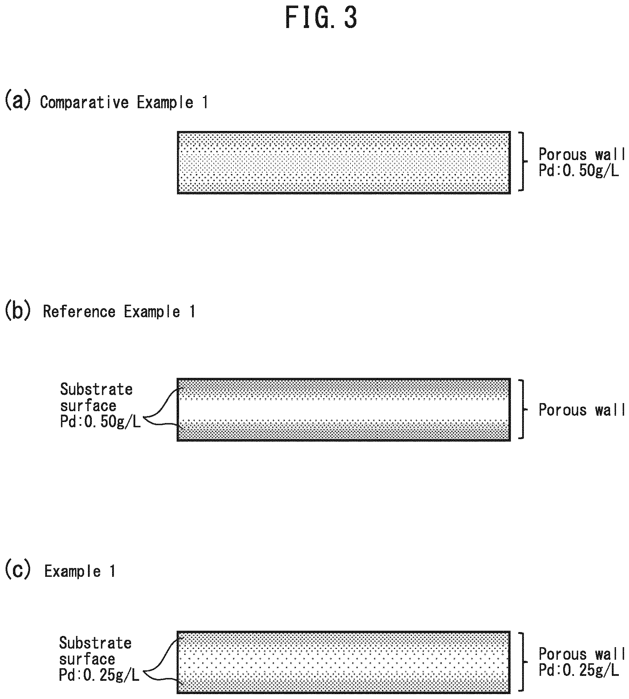

A schematic cross-sectional view showing a configuration of the exhaust gas purification catalytic device obtained in Comparative Example 1 is shown in FIG. 3(a). The shading in FIG. 3(a) schematically illustrates the concentration of supported palladium (the same applies to FIGS. 3(b) and 3(c)).

### «Reference Example 1»

### (1) Preparation of coating liquid

A coating liquid (coating liquid for forming a noble metal concentrated surface) was prepared by charging and then dissolving 0.53 g (0.50 g/L per L of substrate capacity) metallic palladium equivalent of palladium nitrate and hydroxyethyl cellulose (manufactured by Daicel Corporation) in pure water. The viscosity of the coating liquid, measured using a cone plate-type viscometer, model name "TV-33 viscometer", manufactured by Toki Sangyo Co., Ltd., using a 1° 34' × R24 conical flat plate-type cone and changing the rotation speed in the range of 1 to 100 rpm, at 25 °C and a shear rate of 380 s⁻¹, was 500 mPa.

### (2) Manufacture of exhaust gas purification catalytic device

The obtained coating liquid was poured into the substrate and suctioned from the opposite end to coat the substrate with the coating liquid. The substrate after coating was dried and further baked in an electric furnace at 500 °C for 1 h to have palladium supported in the porous wall of the substrate, whereby the exhaust gas purification catalytic device of Reference Example 1 was manufactured.

A schematic cross-sectional view showing a configuration of the exhaust gas purification catalytic device obtained in Reference Example 1 is shown in FIG. 3(b).

### «Example 1»

### (1) Preparation of coating liquid

### (1-1) Preparation of coating liquid for permeating specific noble metal

A coating liquid for permeating a specific noble metal was prepared by charging and then dissolving 0.22 g (0.25 g/L per L of substrate capacity) metallic palladium equivalent of palladium nitrate in pure water.

### (1-2) Preparation of coating liquid for surface-localizing specific noble metal

A coating liquid for surface-localizing the specific noble metal was prepared by charging and then dissolving 0.22 g (0.25 g/L per L of substrate capacity) metallic palladium equivalent of palladium nitrate and hydroxyethyl cellulose (manufactured by Daicel Corporation) in pure water. The viscosity of the coating liquid for surface-localizing the specific noble metal, measured in the same manner as in Reference Example 1, was 500 mPa.

### (2) Manufacture of exhaust gas purification catalytic device

The substrate was immersed in the coating liquid for permeating the specific noble metal obtained in (1-1) above. The substrate after immersing was dried and further baked in an electric furnace at 500 °C for 1 h to have palladium supported in the porous wall of the substrate. Thereafter, the coating liquid for surface-localizing the specific noble metal obtained in (1-2) above was poured into the substrate having palladium supported in the porous wall thereof and suctioned from the opposite end to coat the substrate having palladium supported in the porous wall thereof with the coating liquid. The substrate after coating was dried and baked in an electric furnace at 500 °C for 1 h to have palladium further supported in the porous wall of the substrate whereby the exhaust gas purification catalytic device of Example 1 was manufactured.

A schematic cross-sectional view showing a configuration of the exhaust gas purification catalytic device obtained in Example 1 is shown in FIG. 3(c).

### <<EPMA analysis>>

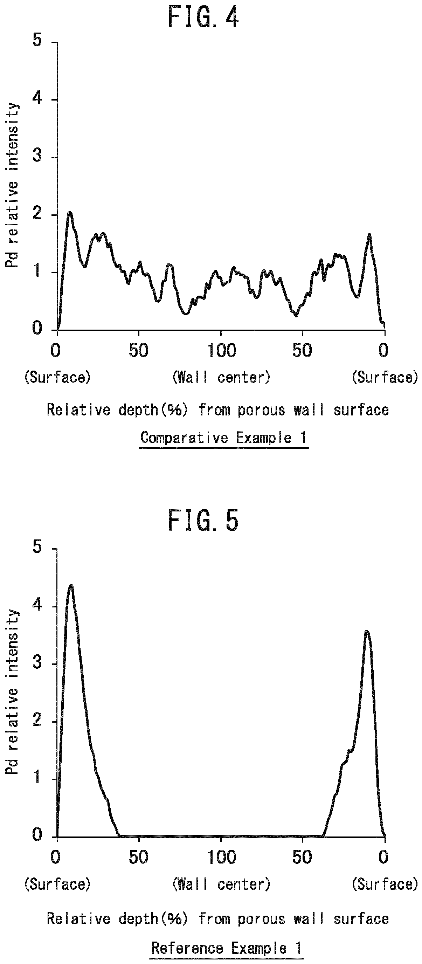

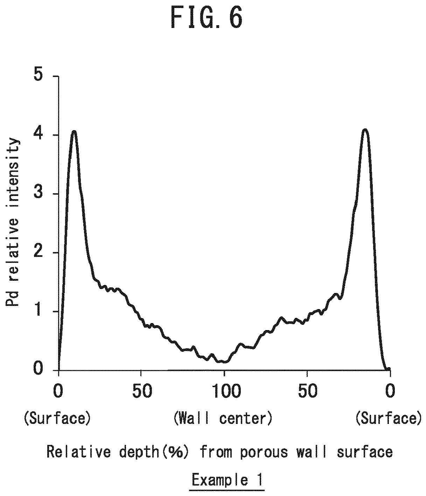

The exhaust gas purification catalytic devices obtained in Comparative Example 1, Reference Example 1, and Example 1 were subjected to electron probe microanalyzer (EPMA) analysis at 300 times magnification to examine the palladium distribution in the thickness direction within the porous wall. Graphs showing the distributions of palladium are shown in FIG. 4 (Comparative Example 1), FIG. 5 (Reference Example 1), and FIG. 6 (Example 1). The values for depths of supporting 30%, 50%, 70%, and 90% by mass of the noble metal are shown in Table 3.

### «Evaluation of OSC ability»

The exhaust gas purification catalytic devices obtained in Comparative Example 1, Reference Example 1, and Example 1 above were each connected to a gas analyzer manufactured by HORIBA, Ltd., and a pretreated gas (1% of H₂ + the balance of N₂) was circulated at a flow rate of 35 L/min for 5 min at 400 °C. Thereafter, the model gases of steps 1 to 7 indicated in Table 1 were flowed continuously and sequentially at a testing temperature of 400 °C.

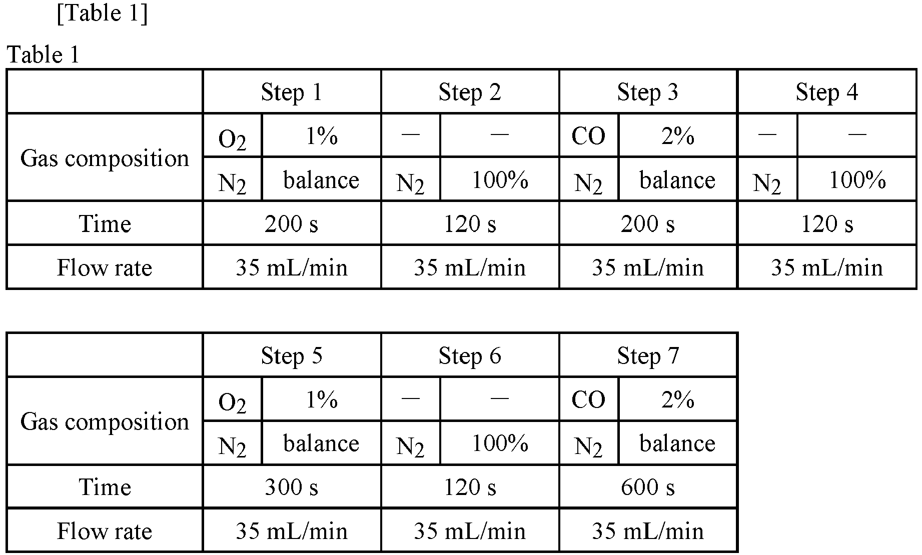

The composition of the gas discharged from each of the exhaust gas purification catalytic devices was tracked over time. The CO₂ emission in step 7 (CO2%) was examined, which was used as an indicator of the OSC ability of each exhaust gas purification catalytic device.

The evaluation results are shown in Table 3. The OSC rate is an integrated value of CO₂ emissions for 20 s from the start of step 7. The OSC amount is an integrated value of CO₂ emissions for 600 s from the start of step 7.

### «Evaluation of exhaust gas purification ability»

The exhaust gas purification catalytic devices obtained in Comparative Example 1, Reference Example 1, and Example 1 above were each connected to a gas analyzer manufactured by HORIBA, Ltd., and a pretreated gas (1% of H₂ + the balance of N₂) was circulated at a flow rate of 50 L/min for 5 min at 400 °C. Thereafter, a cooling gas of 100% N₂ was flowed at a flow rate of 50 L/min to cool the device temperature to 20 °C temporarily.

Next, a model gas with the composition indicated in Table 2 below was circulated in the exhaust gas purification catalytic device at a flow rate of 50 L/min. The temperature of the circulating model gas was set to 20 °C at the start of the circulation and thereafter gradually raised at a temperature increase rate of 35 °C/min. The unit "ppmC" for the concentrations of C₃H₆ and C₃H₈ in Table 2 refers to a capacity ratio in parts per million in terms of carbon. The concentrations correspond to three times the concentrations of C₃H₆ and C₃H₈ expressed in ppm units.

### [Table 2]

**Table 2.**

| Type | Concentration |
|---|---|
| CO₂ | 10% |
| O₂ | 0.65% |
| H₂ | 1,800 ppm |
| H₂O | 10% |
| **NO** | **800 ppm** |
| **CO** | **5,000 ppm** |
| **C₃H₆** | **800 ppm (2,400 ppmC)** |
| **C₃H₈** | **200 ppm (600 ppmC)** |
| N₂ | balance |

The composition of the discharged gas was tracked over time, and the temperatures T50 up to which the purification rates of total hydrocarbon HC (C₃H₆ + C₃H₈) and nitrogen oxide NOₓ (NO) reached 50% were examined. The evaluation results are shown in Table 3.

### [Table 3]

**Table 3. Evaluation results**

| | | Comparative Example 1 | Reference Example 1 | Example 1 |
|---|---|---|---|---|
| Depth of supporting noble metal | Depth of supporting 30% of noble metal (%) | 20.0 | 7.3 | 11.0 |
| | Depth of supporting 50% of noble metal (%) | 32.6 | 10.7 | 18.9 |
| | Depth of supporting 70% of noble metal (%) | 52.3 | 15.2 | 30.5 |
| | Depth of supporting 90% of noble metal (%) | 71.1 | 21.7 | 49.3 |
| OSC ability | OSC rate (CO₂ emission (mL/20 s)) | 7.99 | 4.62 | 7.11 |
| | OSC amount (CO₂ emission (mL/600 s)) | 21.5 | 15.5 | 20.3 |
| Exhaust gas purification ability | T50 (HC) (°C) | 261.9 | 252.0 | 252.6 |
| | T50 (NOₓ) (°C) | 267.8 | 262.1 | 258.6 |

When the obtained results are compared, the following can be understood.

In the exhaust gas purification catalytic device of Comparative Example 1, which belongs to the prior art, it was shown that although the OSC ability (OSC rate and OSC amount) was large, the T50 for HC and NOₓ indicate comparatively high temperatures and the exhaust gas purification ability was limited.

In the exhaust gas purification catalytic device of Reference Example 1, in which the noble metal was localized and supported near the surface of the substrate, although the T50 for HC and NOₓ were improved in comparison with those of Comparative Example 1, the OSC ability was significantly impaired.

In the exhaust gas purification catalytic device of Example 1, which satisfies the predetermined requirements of the present invention, the T50 for HC and NOₓ were improved and the OSC ability was slightly impaired when compared to those of Comparative Example 1. Further, in the exhaust gas purification catalytic device of Example 1, the T50 was the same for HC and improved for NOx when compared to those of Reference Example 1. Moreover, in the exhaust gas purification catalytic device of Example 1, the OSC ability was significantly improved in comparison with that of Reference Example 1.

From the foregoing, it was verified that the exhaust gas purification catalytic device of the present invention has both a high OSC ability and a high exhaust gas purification ability.

### REFERENCE SIGNS LIST

- 1: porous wall
- 2: cells
- 10: exhaust gas purification catalytic device

## Claims

1. An exhaust gas purification catalytic device, comprising
a substrate and
one or more catalytic noble metals supported on the substrate, wherein
the substrate comprises a plurality of cells partitioned by a porous wall;
the substrate contains ceria-zirconia composite oxide particles; and
a specific noble metal, which is one of the one or more catalytic noble metals, satisfies both of requirements (1) and (2) below:
(1) for the specific noble metal, a depth of supporting 50% by mass of the noble metal is 30% or less of a distance from a surface of a porous wall to a center within the porous wall, and
(2) for the specific noble metal, a depth of supporting 90% by mass of the noble metal is 35% or more of a distance from a surface of a porous wall to a center within the porous wall, wherein
the depth of supporting 50% by mass of the noble metal is a depth up to which 50% by mass of the specific noble metal is supported, based on an amount of the specific noble metal supported from the surface of the porous wall to the center within the porous wall, and
the depth of supporting 90% by mass of the noble metal is a depth up to which 90% by mass of the specific noble metal is supported, based on an amount of the specific noble metal supported from the surface of the porous wall to the center within the porous wall.

2. The exhaust gas purification catalytic device according to claim 1, wherein the plurality of cells in the substrate penetrate from an upstream end to a downstream end of an exhaust gas flow.

3. The exhaust gas purification catalytic device according to claim 1, wherein the plurality of cells in the substrate comprise
an inlet side cell, which is opened on an upstream end of an exhaust gas flow and sealed on a downstream end thereof; and
an outlet side cell, which is sealed on the upstream end of the exhaust gas flow and opened on the downstream end thereof, and
are thereby configured to allow exhaust gas flowed into the inlet side cell to pass through the porous wall and discharge from the outlet side cell.

4. The exhaust gas purification catalytic device according to any one of claims 1 to 3, wherein the specific noble metal satisfies requirement (3) below:
(3) for the specific noble metal, a depth of supporting 30% by mass of the noble metal is 18% or less of a distance from a surface of a porous wall to a center within the porous wall, wherein
the depth of supporting 30% by mass of the noble metal is a depth up to which 30% by mass of the specific noble metal is supported, based on an amount of the specific noble metal supported from the surface of the porous wall to the center within the porous wall.

5. The exhaust gas purification catalytic device according to any one of claims 1 to 4, wherein the specific noble metal further satisfies requirement (4) below:
(4) for the specific noble metal, a depth of supporting 70% by mass of the noble metal is 20% to 45% of a distance from a surface of a porous wall to a center within the porous wall, wherein
the depth of supporting 70% by mass of the noble metal is a depth up to which 70% by mass of the specific noble metal is supported, based on an amount of the specific noble metal supported from the surface of the porous wall to the center within the porous wall.

6. The exhaust gas purification catalytic device according to any one of claims 1 to 5, wherein the specific noble metal is platinum, palladium, or rhodium.

7. The exhaust gas purification catalytic device according to any one of claims 1 to 6, wherein the specific noble metal is platinum or palladium.

8. The exhaust gas purification catalytic device according to any one of claims 1 to 7, wherein
the specific noble metal is platinum or palladium, and
the catalytic noble metals include rhodium.
